(19) Europäisches Patentamt
European Patent Office
Office européen des brevets

(11) Veröffentlichungsnummer: **0 282 852**
**B1**

(12) **EUROPÄISCHE PATENTSCHRIFT**

(45) Veröffentlichungstag der Patentschrift: **10.10.90**

(51) Int. Cl.⁵: **C09B 29/085**, D06P 1/18

(21) Anmeldenummer: **88103462.3**

(22) Anmeldetag: **05.03.88**

(54) **Azofarbstoffe.**

(30) Priorität: **18.03.87 DE 3708714**

(43) Veröffentlichungstag der Anmeldung:
**21.09.88 Patentblatt 88/38**

(45) Bekanntmachung des Hinweises auf die Patenterteilung:
**10.10.90 Patentblatt 90/41**

(84) Benannte Vertragsstaaten:
**CH DE FR GB LI**

(56) Entgegenhaltungen:
**FR-A- 2 149 233**
**FR-A- 2 383 924**
**GB-A- 2 034 736**

**Die Akte enthält technische Angaben, die nach dem Eingang der Anmeldung eingereicht wurden und die nicht in dieser Patentschrift enthalten sind.**

(73) Patentinhaber: **BAYER AG,**
**D-5090 Leverkusen 1 Bayerwerk(DE)**

(72) Erfinder: **Hamprecht, Rainer, Dr., Im Kerberich 25,**
**D-5068 Odenthal-Blecher(DE)**

**EP 0 282 852 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der Erfindung sind vergleichsweise preiswerte und dennoch anwendungstechnisch sehr wertvolle Dispersionsfarbstoffe der Formel

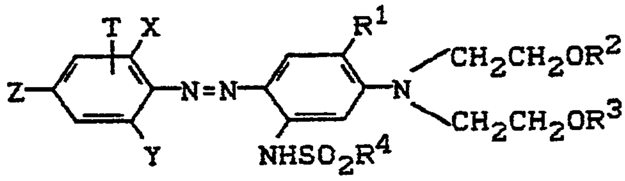

(I)

worin
X = H, Cl, Br oder CN,
Y = H, $NO_2$, CN, Cl oder Br,
Z = $NO_2$ oder CO-O-$C_1$-$C_4$-Alkyl,
T = H, Cl, Br, $CH_3$, CN, SCN oder $NO_2$,
$R^1$ = H, $CH_3$, $OCH_3$ oder $OC_2H_5$,
$R^2$ = $CH_3$ oder $C_2H_5$,
$R^3$ = $CH_3$ oder $C_2H_5$, und
$R^4$ = $C_1$-$C_4$-Alkyl, $CH_2Cl$ oder n-$C_4$-$H_8Cl$ bedeuten.

Vorzugsweise stehen dabei Z für $NO_2$ und T für H.

Besonders bevorzugt sind einerseits Rotfarbstoffe der Formel I,
worin
X = H,
Y = Cl oder Br,
Z = $NO_2$,
T = H,
$R^1$ = H,
$R^2$, $R^3$, $R^4$ = $CH_3$ bedeuten,
sowie andererseits Blaufarbstoffe der Formel I,
worin
X = Cl oder Br,
Y = $NO_2$,
Z = $NO_2$,
T = H,
$R^1$ = H, $OCH_3$ oder $OC_2H_5$ und
$R^2$, $R^3$, $R^4$ = $CH_3$ bedeuten.

Die Herstellung der neuen Farbstoffe erfolgt nach an sich bekannten Methoden durch Diazotierung von Anilinen der Formel

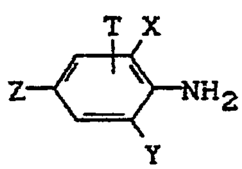

und Kupplung auf Verbindungen der Formel

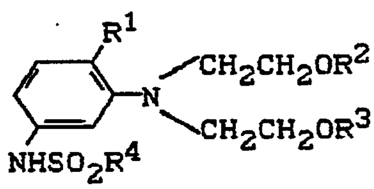

Die Diazotierung kann in üblicher Weise (vgl. Houben-Weyl, Band X/3, Seiten 1–212, mit Salzen oder Estern der salpetrigen Säure oder Nitrosylschwefelsäure in mineralsauren Medien oder in Carbonsäuren gegebenenfalls bei Gegenwart von organischen Lösungsmitteln durchgeführt werden.

Auch die Kupplungsreaktion wird vorzugsweise in saurem Medium gegebenenfalls unter Zusatz von Lösungsmitteln, Kupplungsbeschleunigern, Säureakzeptoren u.a. nach üblichen Methoden durchgeführt (vgl. ebenfalls Houben-Weyl, Band X/3, Seiten 213 ff).

Farbstoffe der Formel I mit einer orthoständigen Cyangruppe können außerdem vorteilhaft durch - sogenannten Cyanaustausch an entsprechenden o-Halogenazofarbstoffen nach an sich bekannten Verfahren hergestellt werden (vgl. DE 2 711 130 = US 4 479 899 bzw. 4 452 609 sowie DE 2 846 438 = US 4 269 770).

Die Synthese der Kupplungskomponenten kann z.B. durch saure oder alkalische Verseifung von Verbindungen der Formel

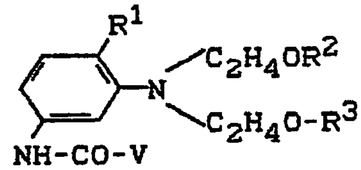

worin
V = H, Alkyl, O-Alkyl oder Aryl bedeutet,
und anschließende Umsetzung mit Sulfonsäurehalogeniden $R^4$-$SO_2$-W, wobei
W = Cl, Br, vorzugsweise Cl bedeuten,
in einem flüssigen inerten Medium, wie z.B. Kohlenwasserstoffen, chlorierten Kohlenwasserstoffe, Ethern, dipolaren aprotischen Lösungsmitteln wie z.B. Acetonitril, aber auch in Wasser gegebenenfalls unter Zusatz von Basen anorganischer oder organischer Natur erfolgen.

Die neuen Farbstoffe ergeben auf Polyester- und Cellulosefasern klare Färbungen mit guten Allgemeinechtheiten.

Gegenüber nächstvergleichbaren bekannten Farbstoffen gemäß US 4 269 770, EP 51 818 oder JA 49/37 931 zeichnen sich die erfindungsgemäßen Farbstoffe bei zumeist geringeren Herstellkosten durch ein verbessertes Ziehvermögen und/oder eine bessere Thermomigrierechtheit aus.

Beispiel 1

Herstellung des Farbstoffs der Formel

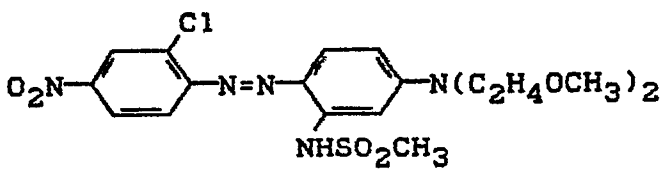

Zu einer feinverteilten Suspension von 16,7 g 74,8 % 2-Chlor-nitroanilin in 30 ml Wasser und 30 ml konzentrierten Salzsäure fügt man 34 g Eis und läßt innerhalb von einer Stunde bei 0–5°C 17,5 ml 30 % Natriumnitritlösung zulaufen. Man rührt weitere 2 Stunden bei 0–5°C und nimmt dann den Nitritüberschuß durch Zugabe von ca. 0,5 g Amidosulfonsäure weg. Unter Eiskühlung läßt man zu dieser Diazotierung eine Lösung von 23 g 3-[Bismethoxyethyl]-amino-methansulfonsäureanilid in 30 ml Eisessig zulaufen, verdünnt mit 300 ml Eiswasser und stellt mit Natriumacetatlösung auf pH 3. Man saugt ab, wäscht mit Wasser neutral und trocknet im Vakuum bei 70°C.

Nach Umkristallisieren aus Dimethylformamid/Wasser erhält man den Farbstoff der obigen Formel in Gestalt dunkler Kristallnadeln, Fp. 155–156°C. Er färbt Polyester nach üblichen Färbeverfahren, vorzugsweise der HT-Methode bei 130°C in einem klaren, blaustichigen Rot mit guten Echtheiten insbesondere mit hervorragender Thermomigrierechtheit.

Beispiel 2

Herstellung des Farbstoffs der Formel

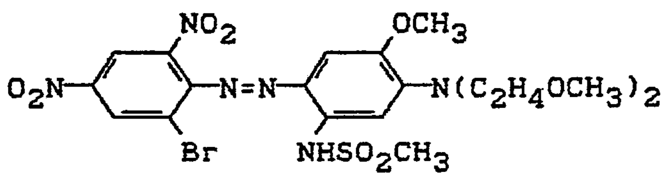

11,2 g 2,4-Dinitro-6-bromanilin werden in 24 ml konzentrierter Schwefelsäure und 2,1 ml Wasser angerührt. Bei 35°C tropft man in 1,5 Stunden 7,5 ml 42 % Nitrosylschwefelsäure zu und läßt noch 3 Stunden bei dieser Temperatur nachrühren. Zu einer Lösung von 15,2 g 2-(Bismethoxyethyl)-amino-4-methansulfonamido-anisol in 100 ml Eisessig läßt man bei 0°C unter Eiskühlung und Zugabe von 300 ml Eiswasser die obige Diazotierung langsam zutropfen. Man läßt über Nacht nachrühren, wobei sich das Kupplungsgemisch auf Raumtemperatur erwärmt, saugt ab und wäscht mit Wasser säurefrei. Der Farbstoff kann durch Umlösen aus Dimethylformamid/Wasser gereinigt werden. Fp: 163° Zers., Sint. 153°. Er färbt Polyester nach üblichen Färbeverfahren, vorzugsweise der HT-Methode in einem rotstichigen Dunkelblau mit guten Echtheiten insbesondere sehr guter Sublimierechtheit und Thermomigrierechtheit.

Nach analogen oder ähnlichen Verfahren können die nachfolgenden Farbstoffe erhalten werden.

| Beispiel | Formel | Nuance auf Polyester |
|---|---|---|
| 3 | 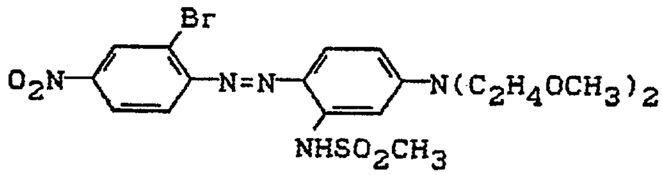 | blaust. Rot |
| 4 | 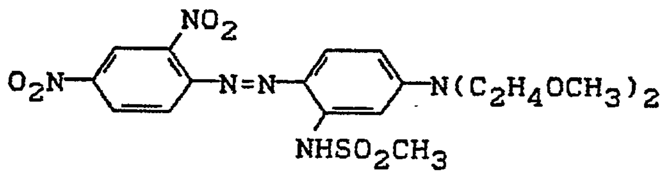 | Rubin |
| 5 | 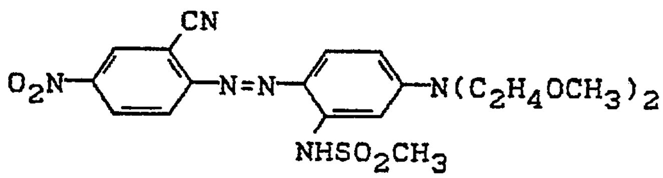 | blaust. Rubin |
| 6 | 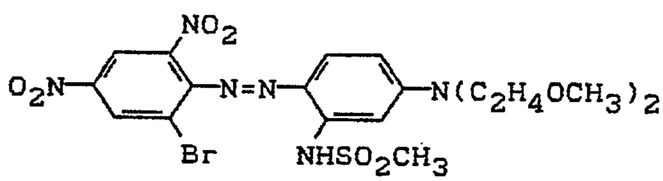 | Rot-violett |
| 7 | 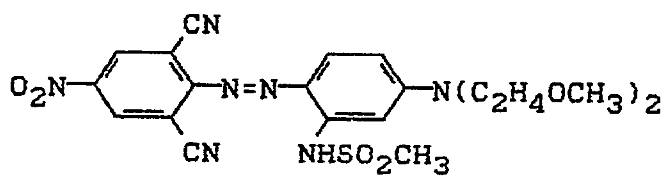 | Rot-stichig Blau |
| 8 | 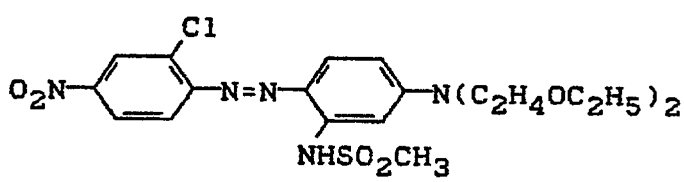 | blaust. Rot |

| Beispiel | Formel | Nuance auf Polyester |
|---|---|---|
| 9 | 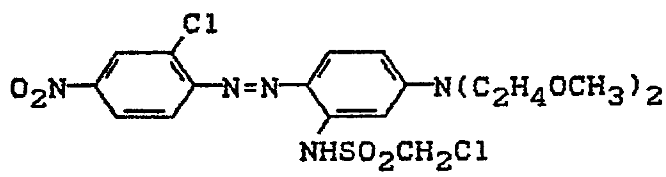 | blaust. Rot |
| 10 | 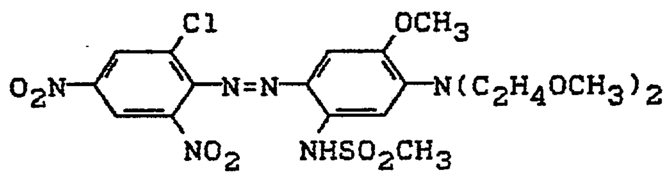 | rotst. Dunkelblau |
| 11 | 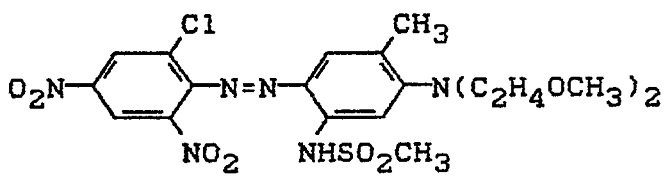 | rotst. Dunkelblau |
| 12 | 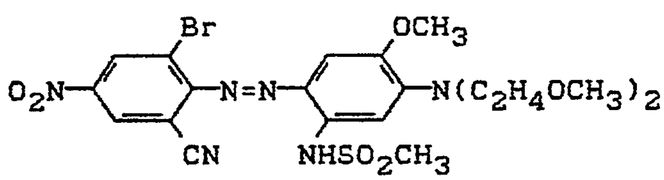 | rotst. Dunkelblau |
| 13 | 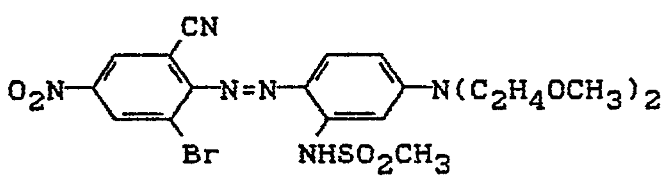 | rot-violett |
| 14 | 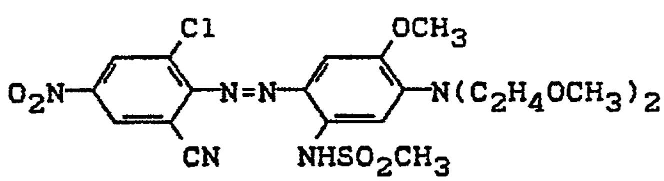 | rotst. Dunkelblau |

| Beispiel | Formel | Nuance auf Polyester |
|---|---|---|
| 15 | 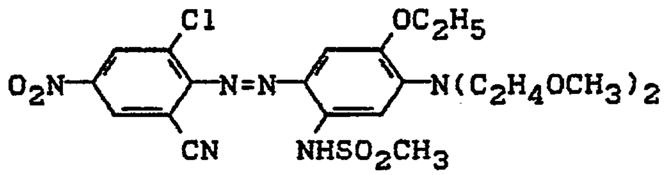 | rotst. Dunkelblau |
| 16 | 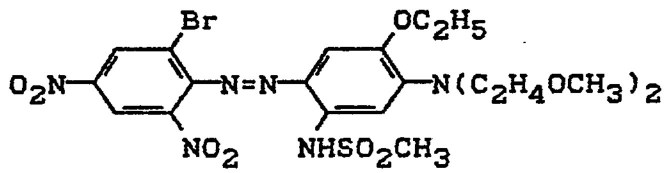 | rotst. Dunkelblau |

**Patentansprüche**

1. Azofarbstoffe der Formel

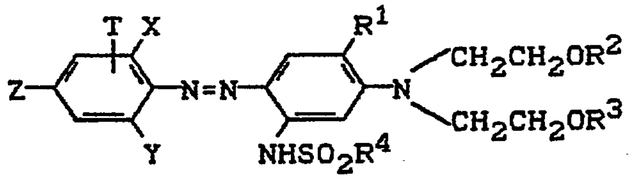

(I)

worin
X = H, Cl, Br oder CN,
Y = H, $NO_2$, CN, Cl oder Br,
Z = $NO_2$ oder CO-O-$C_1$-$C_4$-Alkyl,
T = H, Cl, Br, $CH_3$, CN, SCN oder $NO_2$,
$R^1$ = H, $CH_3$, $OCH_3$ oder $OC_2H_5$,
$R^2$ = $CH_3$ oder $C_2H_5$,
$R^3$ = $CH_3$ oder $C_2H_5$, und
$R^4$ = $C_1$-$C_4$-Alkyl, $CH_2Cl$ oder n-$C_4$-$H_8Cl$ bedeuten.

2. Azofarbstoffe gemäß Anspruch 1, dadurch gekennzeichnet, daß Z = $NO_2$ und T = H bedeuten.

3. Azofarbstoffe gemäß Anspruch 1, dadurch gekennzeichnet, daß
X = H,
Y = Cl oder Br,
Z = $NO_2$,
T = H,
$R^1$ = H,
$R^2$, $R^3$, $R^4$ = $CH_3$ bedeuten.

4. Azofarbstoffe gemäß Anspruch 1, dadurch gekennzeichnet, daß
X = Cl oder Br,
Y = $NO_2$,
Z = $NO_2$,
T = H,
$R^1$ = H, $OCH_3$ oder $OC_2H_5$ und
$R^2$, $R^3$, $R^4$ = $CH_3$ bedeuten.

5. Azofarbstoffe gemäß Anspruch 1 der Formel

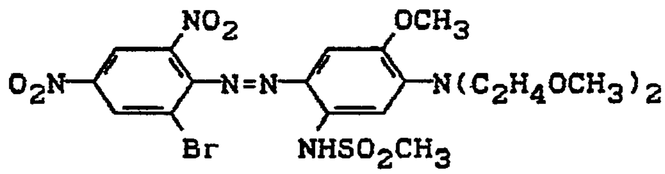

6. Verfahren zur Herstellung von Azofarbstoffen gemäß Anspruch 1, dadurch gekennzeichnet, daß man diazotierte Aniline der Formel

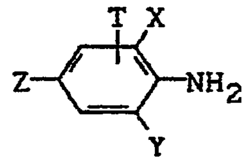

auf Verbindungen der Formel

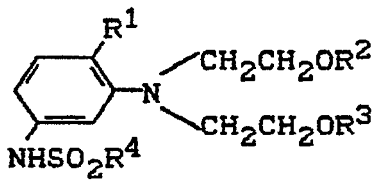

nach an sich bekannten Methoden kuppelt,
wobei X, Y, Z, T und $R^1$–$R^4$ die in Anspruch 1 genannte Bedeutung haben.

7. Verwendung der Farbstoffe gemäß Anspruch 1 zum Färben oder Bedrucken von Polyester- oder Celluloseesterfasern.

## Revendications

1. Colorants azoïques de formule

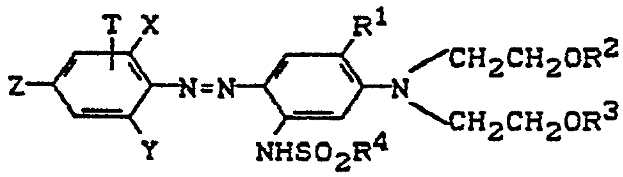

(I)

dans laquelle
X = H, Cl, Br ou CN,
Y = H, $NO_2$, CN, Cl ou Br
Z = $NO_2$ ou CO-O-(alkyle en $C_1$ à $C_4$),
T = H, Cl, Br, $CH_3$, CN, SCN ou $NO_2$,
$R^1$ = H, $CH_3$, $OCH_3$ ou $OC_2H_5$,
$R^2$ = $CH_3$ ou $C_2H_5$,
$R^3$ = $CH_3$ ou $C_2H_5$ et
$R^4$ = alkyle en $C_1$ à $C_4$, $CH_2Cl$ ou n-$C_4H_8Cl$.

2. Colorants azoïques suivant la revendication 1, caractérisés en ce que Z représente $NO_2$ et T représente H.

3. Colorants azoïques suivant la revendication 1, caractérisés en ce que
X = H,
Y = Cl ou Br,
Z = $NO_2$,
T = H,
$R_1$ = H,
$R_2$, $R_3$, $R_4$ = $CH_3$.

4. Colorants azoïques suivant la revendication 1, caractérisés en ce que
X = Cl ou Br,
Y = $NO_2$,
Z = $NO_2$,
T = H,
$R^1$ = H, $OCH_3$ ou $OC_2H_5$ et
$R^2$, $R^3$, $R^4$ = $CH^3$.

5. Colorants azoïques suivant la revendication 1, de formule

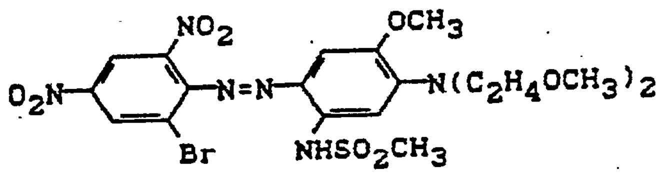

6. Procédé de production de colorants azoïques suivant la revendication 1, caractérisé en ce qu'on fait copuler par des procédés connus des anilines diazotées de formule

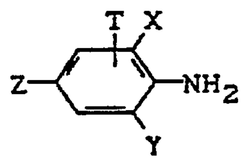

sur des composés de formule

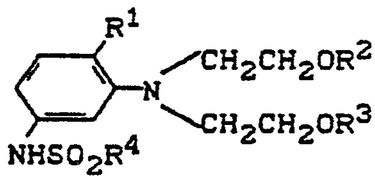

formules dans lesquelles X, Y, Z, T et $R^1$ à $R^4$ ont la définition donnée dans la revendication 1.

7. Utilisation des colorants suivant la revendication 1 pour la teinture ou l'impression de fibres de polyesters ou d'esters de cellulose.

## Claims

1. Azo dyestuffs of the formula

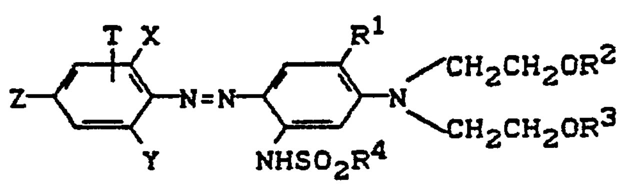

(I)

wherein
X denotes H, Cl, Br or CN,
Y denotes H, N$\ell_2$, CN, Cl or Br,
Z denotes $No_2$ or CO-O-$C_1$-$C_4$-alkyl,
T denotes H, Cl, Br, $CH_3$, CN, SCN or $NO_2$,
$R^1$ denotes H, $CH_3$, $OCH_3$ or $OC_2H_5$,
$R^2$ denotes $CH^3$ or $C_2H_5$,
$R^3$ denotes $CH_3$ or $C_2H_5$ and
$R^4$ denotes $C_1$-$C_4$-alkyl, $CH_2Cl$ or n-$C_4H_8Cl$.

2. Azo dyestuffs according to Claim 1, characterized in that Z denotes $NO_2$ and T denotes H.

3. Azo dyestuffs according to Claim 1, characterized in that
X denotes H,
Y denotes Cl or Br,
Z denotes $NO_2$, T denotes H,
$R^1$ denotes H and
$R^2$, $R^3$ and $R^4$ denote $CH^3$.

4. Azo dyestuffs according to Claim 1, characterized in that
X denotes Cl or Br,
Y denotes $NO_2$,
Z denotes $NO_2$,
T denotes H,
$R^1$ denotes H, $OCH_3$ or $OC_2H_5$ and
$R^2$, $R^3$ and $R^4$ denote $CH_3$.

5. Azo dyestuffs according to Claim 1, of the formula

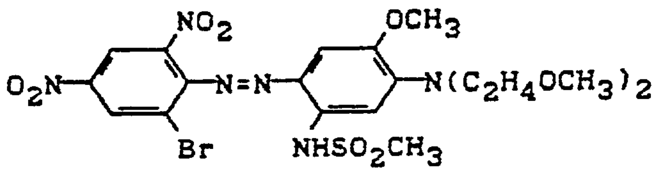

6. Process for the preparation of azo dyestuffs according to Claim 1, characterized in that diazotized anilines of the formula

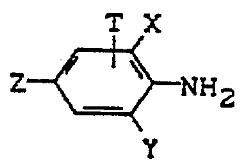

are coupled to compounds of the formula

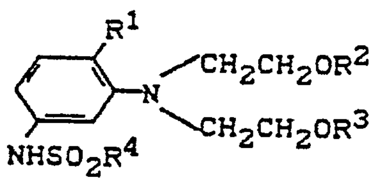

wherein X, Y, Z, T and $R^1$–$R^4$ have the meaning given in Claim 1, by methods which are know per se.

7. Use of the dyestuffs according to Claim 1 for dyeing or printing polyester fibres or cellulose ester fibres.